# EUROPÄISCHE PATENTANMELDUNG

(11) **EP 0 820 793 A2**
(43) Veröffentlichungstag der Anmeldung: **28.01.1998**
(21) Anmeldenummer: 97112152.0
(22) Anmeldetag: 16.07.1997
(51) Int. Cl.: B01D 1/00, B01D 3/10, B64D 15/00

(54) **Vorrichtung und Verfahren zur Abtrennung eines Alkoholkonzentrates aus einem Wasseralkoholgemisch**

(30) Priorität: 22.07.1996 DE 19629434
(71) Anmelder: Vogel, Ludwig, 89518 Heidenheim (DE)
(72) Erfinder: Ludwig Vogel, 89518 Heidenheim (DE); Reinhard Lüdemann, 22299 Hamburg (DE)
(74) Vertreter: Weitzel, Wolfgang, Dr.-Ing. Patentanwalt

(57) **Zusammenfassung**

Die Erfindung betrifft ein Verfahren zur Abtrennung eines Alkoholkonzentrates aus einem Flugzeug-Enteisungsmittel umfassend wenigstens ein Gemisch bestehend aus wenigstens einem Anteil Wasser und einem Anteil eines oder mehrerer Alkohole mit folgenden Schritten:
Zuführen des Gemisches in einen Behälter
Erhitzen und Verdampfen eines Anteiles des Gemisches im Behälter
Abscheiden des im wesentlichen von den alkoholischen Bestandteile des Gemisches freien Dampfes an einer Kondensiereinrichtung
Abführen des abgeschiedenen Kondensates sowie des durch die Verdampfung gewonnenen Destillates aus dem Behälter.

Die Erfindung ist dadurch gekennzeichnet, daß das Erhitzen und Verdampfen des Anteiles des Gemisches im Behälter bei einem Unterdruck zwischen 4,0 und 6,0 kPa und bei einer Temperatur zwischen 35° C und 40° C erfolgt, derart, daß das Kondensat einen Anteil von maximal 5 Gewichtsprozent Wasser aufweist.

## Beschreibung

Die vorliegende Erfindung betrifft ein Verfahren und eine Vorrichtung zur Abtrennung eines Alkoholkonzentrates aus einem Flugzeug-Enteisungsmittel umfassend wenigstens ein Gemisch aus einem Anteil Wasser und einem Anteil eines oder mehrerer Alkohole gemäß dem Oberbegriff des Anspruches 1 bzw. 10.

Bislang wurden Abwässer enthaltende Flugzeug-Enteisungsmittel, wie sie beispielsweise in Enteisungsständen für zivile und militärische Flugzeuge anfallen, nach entsprechender Verdünnung in die Abwässer eingeleitet und hierdurch die städtischen Klärwerke belastet. Trotz der guten biologischen Abbaubarkeit der nichttoxischen Glykole hat sich herausgestellt, daß bei Einleiten einer großen Menge an Schmelzwasser-Enteisungsmittelmischungen in Gewässer aufgrund des durch den Glykolanteil bedingten, hohen CSB-Wertes Beeinträchtigungen und Schäden an der Gewässerbiologie auftreten können. Gemäß gesetzlichen Bestimmungen ist eine derartige Entsorgung der Abwässer nicht mehr zulässig.

Alternativ zur hohen Verdünnung, mit denen man die Enteisungsmittel-Rückstände versehen hatte, können die Enteisungsmittel enthaltenden Abwässer in einer Destillationskolonne aufgearbeitet werden. Wegen der in Flugzeug-Enteisungsmitteln enthaltenen Zusatzkomponenten, wie beispielsweise Verdickersysteme, die Harzbildner umfassen können, wird die Destillation bei hohen Temperaturen durchgeführt. Die Destillation bei hohen Temperaturen zeichnet sich durch eine hohe Trennschärfe auf, so daß die einzelnen Komponenten sehr gut fraktioniert werden können.

Nachteilig an dem bekannten Destillationsverfahren ist, daß zur Erzielung von Temperaturen, die höher als 126°C sind, ein sehr hoher Energieeinsatz notwendig ist.

Aufgabe der Erfindung ist es daher, ein Verfahren und eine Vorrichtung zur Abtrennung eines Alkoholkonzentrates aus einem Flugzeug-Enteisungsmittel umfassend wenigstens ein Gemisch bestehend aus einem Anteil Wasser und einem Anteil eines oder mehrerer Alkohole anzugeben, mit denen die Nachteile des Standes der Technik überwunden werden können und es insbesondere möglich ist, mit einem sehr geringen Energieeinsatz ein im wesentlichen von Alkohol freies Destillat und ein Konzentrat mit einem sehr niedrigen Wasseranteil abzutrennen. In einer besonders vorteilhaften Ausgestaltung sollen die in einem Konzentrat angereicherten Alkohole derart frei von Verunreinigungen vorliegen, daß eine problemlose Aufarbeitung möglich ist.

Erfindungsgemäß wird diese Aufgabe durch das Verfahren gemäß Anspruch 1 und die Vorrichtung gemäß Anspruch 10 gelöst.

So ist es bei einer Vakuumverdampfung eines Gemisches umfassend wenigstens Wasser und einen oder mehrere Alkohole erstmals möglich, ein Konzentrat mit einem Anteil von maximal 5 % Wasser bei äußerst niedrigem Energieeinsatz zu erhalten.

Da mit dem erfindungsgemäßen Verfahren Flugzeug-Enteisungsmittel aufgearbeitet werden, enthält das Gemisch einen Anteil eines zweiwertigen Alkoholes, wobei dieser zweiwertige Alkohol Glykol ist.

Gebräuchliche Flugzeug-Enteisungsmittel enthalten beispielsweise einen Glykolanteil von mindestens 80 Gewichtsprozent und in einer anderen Ausführungsform korrosionsinhibitierte Glykol-Wasser-Gemische mit einem Glykolgehalt von mindestens 50 %, die noch ein Verdickersystem beinhalten. Dieses Verdickersystem wiederum schützt durch seine strukturviskosen, filmbildenden Eigenschaften zusätzlich vor einer Wiedervereisung. Als Glykole werden beispielsweise Propylenglykol oder aber auch Diehtylenglykol verwendet.

Die je nach Wetterlage aufzubringenden Glykolgemische werden in Abhängigkeit von der Temperatur mit Wasser verdünnt und ab ca. -7° C unverdünnt aufgetragen. Das abtropfende Material läuft über Sammelrinnen in einen Sammeltank. Kommen Regen und Schmelzwasser hinzu, so gelangen diese teilweise ebenfalls in diesen Sammeltank, so daß ein Gemisch in dem Sammeltank entsteht, das einen in einem sehr breiten Bereich variierenden Wasseranteil von etwa 50 - 90 Gewichtsprozent aufweisen kann.

Sofort nach Einleitung in den Sammeltank weist das Gemisch einen CSB-Wert von etwa 5 000 bis 2 000 Milligramm pro Liter (mg/l) auf. Lagert das Gemisch über längere Zeit in dem Sammeltank, so steigt der CSB-Wert aufgrund von Gärungsprozessen bereits nach kurzer Lagerzeit, beispielsweise von 3 Wochen, sehr stark an. Nach derartigen Lagerzeiten wurden CSB-Werte von 60 000 bis 100 000 Milligramm pro Liter (mg/l) gemessen. Eine nicht sorgfältige Entleerung der Sammeltanks und der Verbleib von Altmaterial darin beschleunigen den Gärungsprozeß und unterstützen ihn.

Selbst bei optimalen Lagerbedingungen, die solche Gärungsprozesse vermeiden, kann das aufzutrennende Gemisch je nach Lagerzeit einen CSB-Wert, der zwischen 5 000 und 10 000 Milligramm pro Liter (mg/l) liegt, aufweisen.

In einer Fortbildung der Erfindung ist es Ziel, nicht nur ein Konzentrat mit sehr niedrigem Wasseranteil bei relativ niedrigem Energieeinsatz zu erhalten, sondern auch den CSB-Wert des Destillates auf maximal 5 000 Milligramm pro Liter (mg/l) zu begrenzen.

Als besonders vorteilhaft zur Erzielung eines niedrigen CSB-Anteiles im Destillat hat sich gezeigt, das Verfahren zur Abtrennung des Alkoholkonzentrates dahingehend weiterzubilden, daß dem Kernstück der Vakuumverdampfung ein Vorbehandlungsverfahren vorgeschaltet ist, das sich im wesentlichen dadurch auszeichnet, daß der CSB-Wert des Gemisches im Sammelbehälter nicht über einen Wert von 25 000 Milligramm pro Liter (mg/l) ansteigt und somit gewährleistet ist, daß das der Vakuumverdampfung zugeführte Gemisch immer einen CSB-Wert besitzt, der niedriger als dieser Grenzwert ist. Hierzu ist vorgesehen, daß das Flugzeug-Enteisungsmittel zusammen mit den Waschwässern, den Regen- und Schmelzwässern aufgefangen und in einen Sammelbehälter geführt wird, von wo aus das Gemisch wiederum entnommen wird und der Vakuumverdampfung zugeführt wird. In den Sammelbehälter wird hierzu ein Gas, enthaltend einen gewissen Sauerstoffanteil, eingebracht und das Gemisch mit mäßiger Pumprate umgepumpt. Besonders vorteilhaft ist es, Luft in den Sammelbehälter einzublasen.

In einer weitergebildeten Ausführungsform kann vorgesehen sein, mehrere Sammelbehälter als Auffang- und Lagerbehälter für das Gemisch zu benutzen, wobei zwischen den Behältern ein Austausch stattfindet, derart, daß in allen Behältern ein etwa gleicher CSB-Anteil eingestellt wird, so daß an der Vakuumverdampfungsanlage immer in etwa gleiche CSB-Werte bei der Gemischeinleitung vorgefunden werden.

In einer besonders vorteilhaften Ausgestaltung der Erfindung ist vorgesehen, im Vorbehandlungsverfahren ein Fällungsmittel vorzugsweise in einer Konzentration von 0,5 - 0,7 Gewichts-% zuzugeben, um den im Gemisch enthaltenen Anteil an Verdicker, Schwermetallen, Farbrückständen in eine Schlammphase auszufällen. Die Ausfällung geschieht bevorzugt dadurch, daß nach dosierter Zugabe des Fällungsmittels für etwa 5 bis 10 Minuten das im Sammelbehälter befindliche Gemisch umgerührt wird. Durch das Ausfällen werden folgende überraschenden Vorteile erreicht:
- wesentlich höhere Reinheit des Konzentrates nach der Vakuumverdampfung
- geringere Schwankungen des CSB-Wertes des Destillates im zeitlichen Verlauf
- pH-Wert des Kondensates bzw. Destillates im Bereich von 5,5 - 6,5

Vor allem letzteres ist für den Fachmann überraschend, da der pH-Wert nach der Fällung und vor Einleiten des Gemisches in die Vakuumverdampfungsanlage deutlich höher, nämlich im Bereich zwischen 7 und 8, liegt und man auch im Auslauf einen ebensolchen pH-Wert erwarten würde.

In einer verbesserten Ausführungsform der Erfindung kann vorgesehen sein, das Verfahren dahingehend weiterzuentwickeln, daß das in dem Verdampfungsbehälter aus dem Kondensat gewonnene Destillat einer Nachbehandlung unterzogen wird, bei der der CSB-Anteil nochmals herabgesetzt wird. Hierzu ist vorgesehen, das Destillat einer Umkehrosmose-Vorrichtung zuzuführen und dort 20 % des zugeführten Destillates aufzukonzentrieren, das wiederum in den Verdampferbehälter rückgeführt wird. 80 % des zugeführten Destillates werden entnommen und in das Abwasser eingeleitet. Der in das Abwasser eingeleitete Anteil weist einen CSB-Wert auf, der geringer als 1 000 Milligramm pro Liter (mg/l) ist. Mit einer derartigen Nachbehandlung ist es sogar möglich, CSB-Werte von 50 Milligramm pro Liter (mg/l) zu erreichen. Neben dem Verfahren stellt die Erfindung auch eine Vorrichtung zur Verfügung, mit deren Hilfe es möglich ist, den in einem Flugzeug-Enteisungsmittel enthaltenen Alkoholanteil unter sehr geringem Energieeinsatz abzutrennen. Hierzu schlägt die Erfindung eine Vorrichtung umfassend einen Vakuumverdampferbehälter vor, in dem das Gemisch bei einem Unterdruck von 4,0 - 6,0 kPa Druck und Temperaturen von 35,0 - 40° C verdampft wird. Überraschenderweise wird auch bei dieser Verfahrensführung trotz der niedrigen Temperatur eine hohe Trennschärfe erreicht.

In einer weitergebildeten Ausführungsform ist vorgesehen, daß die Konzentratabzueinrichtung, die an die Vakuumverdampfer angebracht ist, eine Pumpeneinrichtung umfaßt.

Auch die Kondensat- bzw. Destillatabführeinrichtung kann eine solche Pumpeneinrichtung umfassen.

Besonders energiesparend ist es, wenn die Pumpeneinrichtung der Destillatabführeinrichtung einen Injektor umfaßt, so daß mit Hilfe dieser Pumpeneinrichtung, der in dem Vakuumbehälter notwendige Unterdruck erzeugt werden kann.

Vorteilhafterweise wird sich die in dem Vakuumverdampferbehälter eingebrachte Kondensiereinrichtung aus einem Wärmetauscher sowie einer Auffangwanne für das am Wärmetauscher abgeschiedene Kondensat zusammen. Die Kondensiereinrichtung ist derart ausgelegt, daß sie ein Abkühlen des Kondensates bzw. Destillates auf 20 - 30° C ermöglicht.

Die für die Abtrennung des Alkoholanteils benötigte Energie kann dadurch weiter minimiert werden, daß die für Vorrichtung vorgesehenen Heizeinrichtungen außerhalb des Vakuumbehälters angeordnet sind. In diesen, außerhalb des Behälter angeordneten Heizeinrichtungen wird das dem Behälter zuzuführende Gemisch auf die Prozeßtemperatur von 35 - 40° C erhitzt und anschließend in den Vakuumbehälter abgegeben. Vorteilhafterweise kann hierfür ein Verdichter in Verbindung mit einem Rohrbündel-Wärmetauscher eingesetzt werden.

Für einen möglichst niedrigen CSB-Anteil im Destillat, das aus dem Verdampferbehälter abgeführt wird, ist es von Vorteil, wenn das aufzuarbeitende bzw. das zu trennende Gemisch durch eine Vorbehandlungseinrichtung geführt wird. Diese weist vorteilhafter Weise eine Sammeleinrichtung zum Sammeln des aufzubereitenden Gemisches sowie mindestens einen Vorratsbehälter zur Lagerung desselben auf, wobei der mindestens eine Vorratsbehälter eine Vorrichtung zum Einblasen von Luft sowie zum Umwälzen des Gemisches umfaßt.

Der CSB-Wert des eingeleiteten Abwassers kann weiter reduziert werden, wenn der Verdampferanlage eine Nachbereitungsanlage nachgeordnet ist. Diese Nachbereitungs bzw. Nachbehandlungsanlage umfaßt vorteilhafter Weise eine Umkehrosmose-Einrichtung, die die Aufkonzentration eines Anteils des Destillates ermöglicht, so daß der CSB-Wert in dem nicht aufkonzentrierten, aus der Umkehrosmose-Einrichtung in das Abwasser eingeleitete Destillat einen CSB-Wert von maximal 1 000 Milligramm pro Liter (mg/l) aufweist.

Die Erfindung soll nachfolgend beispielhaft anhand der beigefügten Figuren beschrieben werden.

Es zeigen:
- Fig.1:: Die erfindungsgemäße Auftrennvorrichtung, umfassend im wesentlichen die Vakuumverdampfeinrichtung mit den zugeordneten Nebenaggregaten.
- Fig.2:: Eine weitergebildete Ausführungsform der erfindungsgemäßen Anlage in schematischer Form, wobei die Anlage Vorbereitungs- wie auch Nachbereitungseinrichtungen umfaßt.

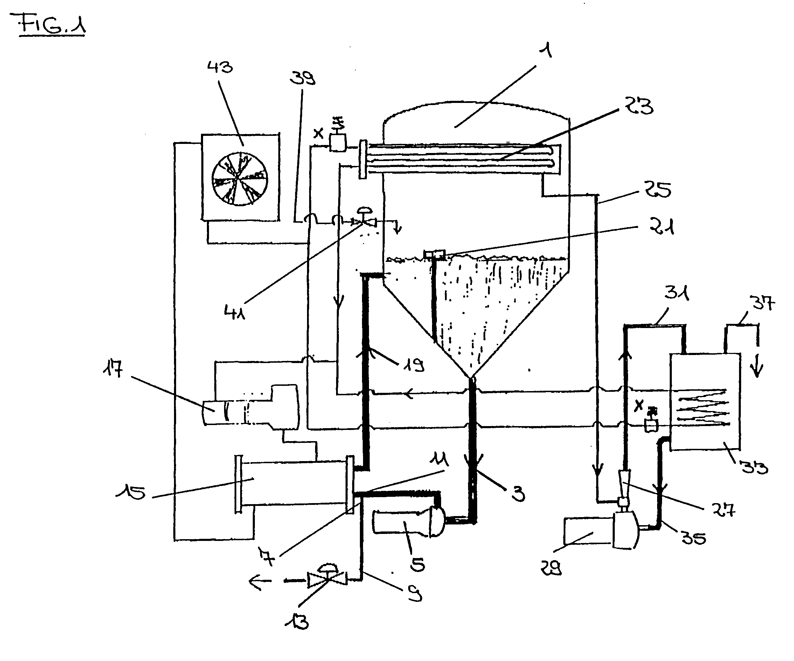

In Fig. 1 ist eine erfindungsgemäße Vorrichtung zur Abtrennung eines Alkoholkonzentrates aus einem wenigstens Alkohol und Wasser umfassenden Gemisches dargestellt.

Kernstück der Vorrichtung ist der Verdampferbehälter 1, der als Unterdruckbehälter ausgebildet ist und in dem Unterdrücke zwischen 4,0 und 6,0 kPa eingestellt werden können. Der Vakuumverdampferbehälter ist in seinem unteren Bereich spitzkegelig ausgeführt. Dies hat zum Vorteil, daß sich das im unteren Teil sammelnde Konzentrat leicht über die in das untere Ende mündende Konzentratabziehleitung greift, abgezogen werden kann. Das Abziehen des Konzentrates wird durch die in die Konzentratabführleitung eingebrachte Konzentratpumpe unterstützt. Die Konzentratabführleitung führt von der Pumpe 5 zu einem Verzweigungspunkt 7. Im Verzweigungspunkt 7 verzweigt sich die Abführleitung in eine Konzentrataustrittsleitung 9 und eine Temperierzufuhrleitung 11. Die Konzentrataustrittsleitung 9 umfaßt ein Konzentrataustrittsventil 13, das vorzugsweise luftgesteuert sein kann. Über die Konzentrataustrittsleitung 9 wird das Konzentrat bei geöffnetem Ventil 13 beispielsweise in einen Behälter ausgetragen. Das Konzentrat weist nach dem erfindungsgemäßen Verfahren einen Anteil von maximal 5 % Wasser auf und eignet sich daher in hervorragender Weise für eine Wiederaufarbeitung beispielsweise die Rückgewinnung von Glykolen hieraus.

Um das Konzentrat auf der für die Verdampfung in den Vakuumbehälter notwendigen Temperatur zu halten bzw. es auf diese Temperatur zu bringen, ist zwecks möglichst niedrigem Energieeinsatz vorgesehen, das Konzentrat außerhalb des Verdampferbehälters auf die notwendige Temperatur in einer externen Heizeinrichtung zu bringen. Diese ist in vorliegendem Beispiel als Wärmetauscher 15 in Verbindung mit einem Kompressor 17 ausgebildet. Nachdem das Konzentrat bei geschlossenem Austrittventil 13 durch den Wärmetauscher 15 gepumpt wurde, wird es dem Verdampferbehälter über Leitung 19 erneut zugeführt. Der Konzentrat-Flüssigkeitsstand im Vakuumbehälter wird mittels eines Pegelmessers 21 ständig kontrolliert.

Bei den vorgegebenen Vakuumverdampfbedingungen von 35 - 40° C und 4,0 - 6,0 bar Druck wird ein Anteil des Gemisches bzw. Konzentrates im Verdampferbehälter 1 verdampft. An der im Verdampferbehälter angeordneten Kondensiereinrichtung 23, die im Behälter als Kältesenke wirkt, kondensiert der Dampf und wird in einer Auffangrinne, die vorliegend nicht dargestellt ist, aufgefangen. Das Kondensat bzw. Destillat ist von Alkoholen weitgehend frei und wird über Leitung 25 aus dem Verdampferbehälter abgezogen. Das über die Leitung 25 abgezogene Kondensat bzw. Destillat wird einem Injektor 27 zugeführt, der wiederum an eine Pumpe 29 angeschlossen ist. In den Injektor 27 wird das abgesaugte Kondensat bzw. Destillat wie in einer Wasserstrahlpumpe hineingezogen. Durch diesen Effekt kann mittels des Injektors 27 der Unterdruck in dem Verdampferbehälter 1 eingestellt werden. Das mitgerissene Kondesat bzw. Destillat wird über Leitung 31 einem Wärmetauscher 33 zugeführt und dort abgekühlt, vorzugsweise auf ca. 25° C, um ein optimales Arbeiten des Injektors sicherzustellen. Ein Teil des Kondensates wird über Leitung 35 zur Pumpe zurückgeführt, ein anderer Teil wird über Leitung 35 zur Pumpe zurückgeführt, ein anderer Teil über Leitung 37 von der Vorrichtung abgezogen und der weiteren Verarbeitung zugeführt bzw. in das Abwasser eingeleitet.

Die Gemischzufuhr in den Verdampferbehälter (1) erfolgt über die Gemischzufuhrleitung 39, in die ein beispielsweise luftgesteuertes Einlaßventil 41 eingebracht wird. Die in der Zeichnung mit der Bezugsziffer 21 schematisch angedeutete Niveausteuerung öffnet in Abhängigkeit vom Flüssigkeitsstand das Einlaßventil 41. Andererseits wird das Kondensataustrittsventil 13 entweder über Zeitintervalle oder ein Konzentratdichtemeßgerät gesteuert. Wird über die Austrittsleitung Konzentrat abgezogen, so sinkt der Flüssigkeitsspiegel neben dem Verlust durch Verdampfung stark ab und das Eitnrittsventil 41 wird geöffnet.

Zur Abfuhr von im Wärmetauscherkreislauf befindlichen überschüssigen Energie ist in den Wärmetauscherkreislauf ein weiterer Wärmetauscher 43 eingebracht, der dazu dient einen Wärmeaustausch mit der Luft zu bewerkstelligen und bei Bedarf zugeschaltet wird.

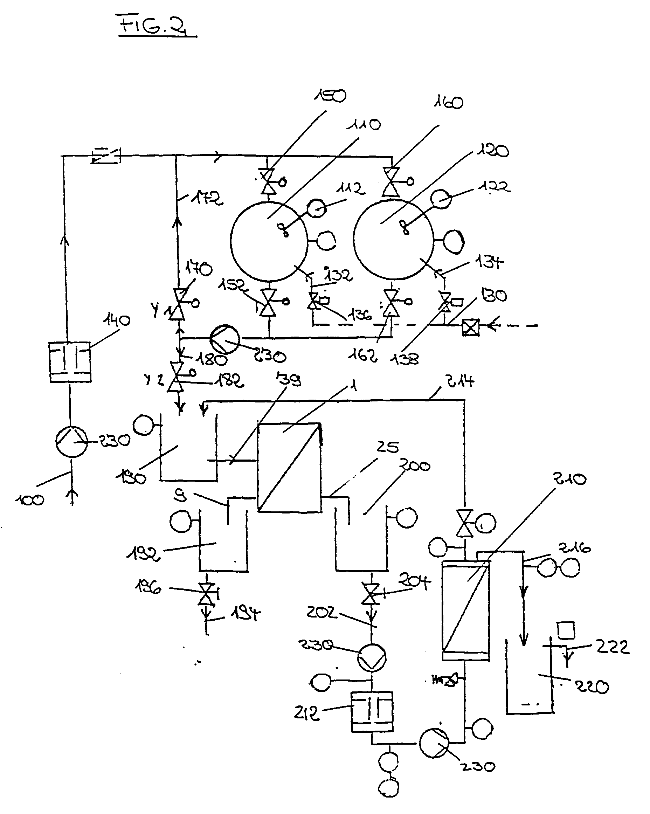

In Fig. 2 ist eine erfindungsgemäße Vorrichtung dargestellt, bei der das Gemisch sowohl einer Vor- als auch einer Nachbehandlung zusätzlich zur Vakuumverdampfung unterzogen wird.

Wie bereits im einleitenden Teil dargestellt, entsteht das aufzuarbeitende Gemisch dadurch, daß bei ungünstigen Temperaturbedingungen Flugzeug-Enteisungsmittel auf die Tragflächen aufgesprüht werden, wobei je nach Umgebungstemperatur das Flugzeug-Enteisungsmittel entsprechend mit Wasser verdünnt wird. Das überschüssige Sprühmittel tropft von der Tragfläche ab und wird über Sammelrinnen, die um den Enteisungsplatz herum angeordnet sind, aufgefangen und gelangt über die Sammelbehälterzufuhreinleitung 100 in die dargestellte Lager- bzw. Sammelbehälter 110 und 120. Die Flugzeugenteisungsmittel entfachen in einer ersten Ausführungsform mindestens einen Glykolanteil von 80 % und in einer zweiten Ausführungsform einen Glykolanteil von mindestens 50 %, wobei bei diesen Gemischen zusätzlich noch ein Verdicker dem Enteisungsmittel zugefügt ist.

Neben dem überschüssigen Enteisungsmittel gelangen über die Sammelrinnen und die Zufuhrleitung 100 aber auch andere Verunreinigungen, wie Farbrückstände, Schwermetalle sowie Regen- und Schmelzwasser in die Lager- bzw. Sammelbehälter 110 bzw. 120. Letzteres führt dazu, daß der Wasseranteil in dem gelagerten und aufzubereitenden Gemisch in einem sehr breiten Bereich variieren kann. So bewegt sich der Wasseranteil des aufzubereitenden Gemisches normalerweise im Bereich zwischen 50 und 90 Gewichtsprozent Wasseranteil.

Um zu verhindern, daß in den Lager- bzw. Sammelgefäßen 110 und 120 ein Gärungsprozeß stattfindet, der den CSB-Anteil in dem aufzubereitendem Gemisch auf Werte bis zu 100 000 Milligramm pro Liter (mg/l) nach 3-wöchiger Lagerung von einem Ausgangswert von etwa 5 000 bis 20 000 Milligramm pro Liter (mg/l) CSB anheben kann, ist in der erfindungsgemäßen Vorbehandlungsvorrichtung vorgesehen, die Lager- bzw. Sammelbehälter 110 und 120 mit Rührern 112 bzw. 122, die motorisch angetrieben sein können, zu versehen, um das im Tank befindliche Gemisch mit mäßiger Geschwindigkeit umzuwälzen. Zusätzlich kann noch vorgesehen sein, Luft über die Leitung 130, die ja bekanntermaßen einen gewissen Sauerstoffanteil aufweist, in den Lagerbehälter einzuführen, wobei die Luftzufuhrleitungen 132 und 134 Ventile 136, 138 aufweisen, die nach Bedarf geöffnet und geschlossen werden können.

Grobe Verunreinigungen des Gemisches werden in die Lagerbehälter 110 und 120 nicht eingetragen. Hierfür sorgt ein in die Zufuhrleitung 100 eingebrachter Vorfilter 140. Um ein aufzubereitendes Gemisch zu erhalten, das eine möglichst gleichmäßige Zusammensetzung aufweist, ist vorgesehen die Zufuhr zu den jeweiligen Sammelbehältern von der Zufuhrleitung 100 mittels von Ventilen 150, 160 zu steuern, ebenso wie die Entnahme hieraus über die Ventile 152 und 162. Das aus einem Sammelbehälter entnommene Gemisch kann bei geöffnetem Ventil 170 über die Rückführleitung 172 erneut der Zufuhrleitung zugeführt werden und von dort auf den einen oder anderen Sammelbehälter verteilt werden. Auf diese Art und Weise ist es möglich, den Inhalt der verschiedenen Sammelbehälter miteinander zu mischen und somit sicherzustellen, daß das Gemisch immer eine gleiche Konsistenz für die Aufarbeitung aufweist.

Im Gemisch nach dem Vorfilter noch enthaltene Rückstände, wie Verdicker, Schwermetalle, Farbrückstände etc., können durch dosierte Zugabe eines Fällungsmittels in eine Schlammphase ausgefällt werden, die aus den Sammelbehältern periodisch abgezogen werden kann. Bevorzugt wird 0,5 - 0,7 % Fällungsmittel zugegeben und für 5-10 Minuten gerührt.

Das zur weiteren Aufarbeitung der Vakuumverdampfervorrichtung zugeführte Gemisch weist nach der beschriebenen Fällung einen pH-Wert von 7-8 auf.

Von den Sammelbehältern gelangt das aufzubereitende Gemisch über die Leitung 180 bei geöffnetem Ventil 182 in den Arbeitsbehälter 190. Der Arbeitsbehälter ist über die Zufuhrleitung 39 mit der in Fig. 1 näher dargestellten Vakuumsverdampfungsvorrichtung verbunden, die wie in Fig. 1 dargestellt im wesentlichen den Vakuumverdampfungsbehälter 1 umfaßt. Wie bei Fig. 1 beschrieben, wird in der Vakuumverdampfungsvorrichtung unter Unterdruck bei 4,0 - 6,0 kPa und Temperaturen von 35 - 40° C das aus den Vorratsbehältern eingeleitete Gemisch in einem Kreislaufprozeß verdampft wird, bis das im unteren Teil des Behälters zurückbleibende Konzentrat einen Wasseranteil von weniger als 5 % aufweist. Ist dies der Fall, so wird das Konzentrat über die Konzentratabführleitung 9 in den Konzentratbehälter 192 geführt. Wenn der Behälter 192 gefüllt ist, wird das Konzentrat über Leitung 194 nach Öffnen des Ventils 196 abgezogen. Das Konzentrat kann sehr gut für eine weitere Aufarbeitung verwendet werden, in der die alkoholischen Bestandteile, insbesondere das Glykol zurückgewonnen werden kann.

Das durch die Vakuumverdampfung gewonnene Kondensat bzw. Destillat, das im wesentlichen den wässrigen Anteil des Gemisches enthält, wird über Leitung 25 dem Destillatbehälter 200 zugeführt. Nach der Vakuumverdampfung weist das Destillat einen CSB-Wert auf, der deutlich geringer als der des eingeleiteten Gemisches ist und einen CSB-Wert von weniger als 5 000 Milligramm pro Liter (mg/l) aufweist. Der pH-Wert des Destillates liegt, auch wenn zuvor eine Fällung durchgeführt wurde, im Bereich von 5,5 - 6,5.

Zu beachten ist, daß der Energieeinsatz in der erfindungsgemäßen Verdampfervorrichtung, wie sie in Fig. 1 dargestellt ist, bei weniger als 500 Watt pro Liter (W/l) Destillat liegt. Damit ist es mittels der Erfindung erstmals möglich, den CSB-Anteil eines glykolhaltigen Gemisches auf einen CSB-Wert, der die Einleitung in herkömmliche städtische Kläranlagen ermöglicht, abzusenken, wobei der Energieeinsatz so bemessen ist, daß für eine derartige Behandlung keine zusätzlichen Kraftanlagen, wie beispielsweise separate kleine Kraftwerke etc., benötigt werden. Der CSB-Wert des Destillates kann in einer Nachbehandlungsvorrichtung wie in Fig. 2 dargestellt noch weiter herabgesetzt werden. Hierzu wird über Leitung 202 bei geöffnetem Ventil 204 das Destillat einer Umkehrosmose-Einrichtung 210 zugeführt. Bevor das Destillat in die Umkehrosmose-Einrichtung 210 gelangt, werden Rückstände im Feinfilter 212 zurückgehalten. In der Umkehrosmose-Einrichtung werden 20 % des Destillates aufkonzentriert und über Leitung 214 dem Arbeitsbehälter zugeführt, mit dem aus dem Sammelbehälter zugeführten Gemisch gemischt und erneut der Vakuumverdampfung unterworfen. Der 80prozentige Anteil des Destillates, der nicht aufkonzentriert wurde, gelangt über Leitung 216 in einen Reinwasserbehälter 220 und kann von dort aus in das öffentliche Kanalsystem über Leitung 222 eingeleitet werden. Der CSB-Anteil des nicht aufkonzentrierten Destillates beträgt maximal 1 000 Milligramm pro Liter.

Wie in Fig. 2 ersichtlich, sind in die einzelnen Zu- und Abführleitungen Pumpen 230 eingebracht, die der Förderung der zu behandelnden Substanzen dienen.

Mit dem erfindungsgemäßem Verfahren und der erfindungsgemäßen Vorrichtung ist es somit erstmals möglich, glykolhaltige Abwässer mit einem hohen CSB-Wert bei stark schwankendem Wasseranteil unter nur geringem Energieeinsatz, der bei weniger als 500 Watt pro Liter Destillat liegt, so aufzuarbeiten, daß die aufgearbeitete Flüssigkeit in ein öffentliches Kanalsystem eingespeist werden kann. Darüber hinaus bietet das vorliegende Verfahren und die vorliegende Vorrichtung den weiteren Vorteil, daß die im Gemisch enthaltenen wertvollen Alkohole, wie Glykol, in einer weiteren Stufe zurückgewonnen werden können, so daß die vorliegende Anlage und das vorliegende Verfahren auch unter dem Aspekt der Wiederverwertung von wertvollen Rohstoffen einen Fortschritt gegenüber dem bislang bekannten Stand der Technik darstellt.

## Patentansprüche

1. Verfahren zur Abtrennung eines Alkoholkonzentrates aus einem Flugzeug-Enteisungsmittel umfassend wenigstens ein Gemisch bestehend aus wenigstens einem Anteil Wasser und einem Anteil eines oder mehrerer Alkohole mit folgenden Schritten:
1.1 Zuführen des Gemisches in einen Behälter;
1.2 Erhitzen des Gemisches und Verdampfen eines Anteiles des Gemisches im Behälter;
1.3 Abscheiden des im wesentlichen von den alkoholischen Bestandteilen des Gemisches freien Dampfes an einer Kondensiereinrichtung;
1.4 Abführen des abgeschiedenen Kondensates bzw. Destillates sowie des durch die Verdampfung gewonnenen Konzentrates aus dem Behälter; dadurch gekennzeichnet, daß
1.5 das Erhitzen des Gemisches und Verdampfen des Gemisches im Behälter bei
1.5.1 einem Unterdruck zwischen 4,0 und 6,0 kPa und bei
1.5.2 einer Temperatur zwischen 35° C und 40° C erfolgt, derart, daß
1.6 das Konzentrat einen Anteil von maximal 5 Gewichtsprozent Wasser aufweist.

2. Verfahren nach Anspruch 1, dadurch gekennzeichnet, daß das Gemisch wenigstens einen Anteil eines zweiwertigen Alkoholes umfaßt.

3. Verfahren nach einem der Ansprüche 1 - 2, dadurch gekennzeichnet, daß das Gemisch wenigstens einen Anteil eines Glykols umfaßt.

4. Verfahren nach einem der Ansprüche 1 - 3, dadurch gekennzeichnet, daß der Wasseranteil des Gemisches 40 bis 90 Gewichsprozent beträgt.

5. Verfahren nach einem der Ansprüche 1 - 4, dadurch gekennzeichnet, daß das Gemisch des weiteren einen Anteil eines Verdickersystems umfaßt, welches Flugzeug-Enteisungsmitteln zugegeben wird und strukturbildende viskose Eigenschaften aufweist.

6. Verfahren nach einem der Ansprüche 1 - 5, dadurch gekennzeichnet, daß das zugeführte Gemisch einen CSB-Wert von 5 000 - 10 000 Milligramm pro Liter (mg/l) aufweist.

7. Verfahren nach einem der Ansprüche 1 - 6, dadurch gekennzeichnet, daß das Destillat einen CSB-Anteil von 500 - 5 000 Milligramm pro Liter (mg/l) aufweist.

8. Verfahren nach einem der Ansprüche 1 - 7, dadurch gekennzeichnet, daß das zugeführte Gemisch einer Vorbehandlung unterzogen wird, umfassend die Schritte
8.1 Sammeln des Gemisches umfassend wenigstens einen Anteil Wasser und einen Anteil eines oder mehrerer Alkohole in wenigstens einem Sammelbehälter.
8.2 Einblasen eines Gases enthaltend wenigstens einen Anteil Sauerstoff in den Sammelbehälter
8.3 Umpumpen des Gemisches in den wenigstens einen Sammelbehälter derart, daß der CSB-Wert des Gemisches in dem Sammelbehälter nicht größer als 25 000 Milligramm pro Liter (mg/l) ist.

9. Verfahren nach einem der Ansprüche 1 - 8, dadurch gekennzeichnet, daß aus dem Verdampfungsbehälter gewonnene Destillat einer Nachbehandlung unerzogen wird, umfassend folgende Schritte:
9.1 das Destillat wird einer Vorrichtung zugeführt, die nach dem Prinzip der umgekehrten Osmose mit Drücken von 40 - 150 bar arbeitet;
9.2 20 % des zugeführten Destillates werden aus der Vorrichtung in aufkonzentrierter Form in den Verdampferbehälter rückgeführt;
9.3 80 % des zugeführten Destillates werden der Vorrichtung entnommen, wobei das entnommene Destillat einen CSB-Wert aufweist, der kleiner als 1 000 Milligramm pro Liter (mg/l) ist.

10. Vorrichtung zur Abtrennung eines Alkoholkonzentrates aus einem Flugzeug-Enteisungsmittel umfassend wenigstens ein Gemisch aus wenigstens einem Anteil Wasser und einem Anteil eines oder mehrerer Alkohole mit
10.1 einem Vakuumverdampfbehälter (1);
10.2 einer Gemischzuführeinrichtung (39) zur Zuführung des Gemisches;
10.3 eine Konzentratabzieheinrichtung (9) zum Abziehen des Konzentrates;
10.4 eine Kondensatabführeinrichtung (25) zur Abführung des aus der Verdampfung des Gemisches gewonnenen Kondensates bzw. Destillates;
10.5 einer Heizeinrichtung (15, 17);
10.6 einer Kondensiereinrichtung (23); dadurch gekennzeichnet, daß
10.7 der Vakuumverdampfbehälter (1) ein Unterdruckbehälter ist und bei Verdampfen des Gemisches bei 4,0 - 6,0 kPa Druck im Vakuumverdampfbehälter (1) und einer Temperatur von 35,0 - 40° C die Leistungsaufnahme der Vorrichtung geringer als 500 W/l Destillat ist

11. Vorrichtung nach Anspruch 10, dadurch gekennzeichnet, daß die Konzentratabzieheinrichtung eine Pumpeneinrichtung (5) umfaßt.

12. Vorrichtung nach einem der Ansprüche 10 - 11, dadurch gekennzeichnet, daß die Kondensat- bzw. Destillatabführeinrichtung Pumpeneinrichtungen (29) umfaßt.

13. Vorrichtung nach Anspruch 12, dadurch gekennzeichnet, daß die Destillatpumpeneinrichtung (29) eine Injektoreinrichtung (27) zum Aufbringen des Unterdruckes in dem Vakuumverdampfbehälter umfaßt.

14. Vorrichtung nach einem der Ansprüche 10 - 12, dadurch gekennzeichnet, daß die Kondensiereinrichtung (23) einen Wärmetauscher sowie eine Auffangwanne für das Kondensat bzw. Destillat aufweist.

15. Vorrichtung nach Anspruch 14, dadurch gekennzeichnet, daß die Kondensiereinrichtung (23) derart ausgelegt ist, daß das Kondensat bzw. Destillat auf 20 - 30° C abgekühlt wird.

16. Vorrichtung nach einem der Ansprüche 10 - 15, dadurch gekennzeichnet, daß die Heizeinrichtung eine außerhalb des Vakuumverdampfbehälters angeordnete Heizeinrichtung ist, in der das dem Behälter zugeführte Gemisch auf die vorgesehene Temperatur zwischen 35 und 40° C gebracht wird.

17. Vorrichtung nach Anspruch 16, dadurch gekennzeichnet, daß die Heizeinrichtung einen Verdichter (17) sowie einen Rohrbündelwärmetauscher (15) umfaßt.

18. Vorrichtung nach Anspruch 17, dadurch gekennzeichnet, daß die Vorrichtung eine Vorbehandlungsvorrichtung für das dem Vakuumverdampfbehälter zuzuführende Gemisches umfaßt.

19. Vorrichtung nach Anspruch 18, dadurch gekennzeichnet, daß die Vorbehandlungsvorrichtung eine Sammeleinrichtung zum Sammeln des aufzubereitenden Gemisches umfaßt sowie mindestens einen Vorratsbehälter (110, 120), dem das gesammelte Gemisch zugeführt wird zur Lagerung des Gemisches, wobei der mindestens eine Vorratsbehälter (110, 120) eine Vorrichtung zum Einblasen von Luft (132, 134) sowie eine Umwälzvorrichtung (112, 122) zur Umwälzung des zu lagernden Gemisches aufweist.

20. Vorrichtung nach einem der Ansprüche 10 - 19, dadurch gekennzeichnet, daß die Vorrichtung eine Nachbehandlungsvorrichtung für das dem Vakuumverdampfbehälter entnommene Kondesat bzw. Destillat umfaßt.

21. Vorrichtung nach Anspruch 20, dadurch gekennzeichnet, daß die Nachbehandlungsvorrichtung eine Umkehrosmosevorrichtung (210) zur Aufkonzentration eines Anteiles des der Nachbehandlungsvorrichtung zugeführten Destillates umfaßt, derart, daß in dem nicht aufkonzentrierten Destillatanteil ein CSB-Wert von maximal 1 000 Milligramm pro Liter (mg/l) vorliegt.
